# EUROPEAN PATENT SPECIFICATION

(11) **EP 0 877 526 B1**
(45) Date of publication and mention of the grant of the patent: **16.01.2008**
(21) Application number: 98303446.3
(22) Date of filing: 01.05.1998
(51) Int. Cl.: H04N 5/455, H04L 27/26

(54) **Demodulating digital video broadcast signals**
Demodulation von digitalen Videorundfunksignalen
Démodulation de signaux vidéo numériques diffusés

(30) Priority: 02.05.1997 GB 9709063; 30.07.1997 US 54195 P; 22.12.1997 GB 9727112; 22.12.1997 GB 9727113; 27.04.1998 GB 9808989; 27.04.1998 GB 9808993; 27.04.1998 GB 9808990; 27.04.1998 GB 9808991; 27.04.1998 GB 9808992
(43) Date of publication of application: 11.11.1998
(73) Proprietor: LSI Logic Corporation, Milpitas, CA 95035 (US); BRITISH BROADCASTING CORPORATION, London W1A 1AA (GB)
(72) Inventor: Guyot, Jean Marc, 75014 Paris (FR); Clarke, Christopher Keith Perry, Crawley, West Sussex RH10 4TR (GB); Mitchell, Justin David, Crawley, West Sussex RH10 7ZH (GB); Sadot, Philippe, 92410 Ville d'Avray (FR); Regis, Lauret, 78120 Sonchamp (FR); Stott, Jonathan Highton, Horley, Surrey RH6 9AR (GB); Robinson, Adrian Paul, London W14 0RH (GB); Haffenden, Oliver Paul, Tooting, London SW17 7LF (GB)
(74) Representative: Holmes, Miles Keeton

(56) References cited:
- EP-A- 0 683 576
- EP-A- 0 762 703
- WO-A-95/05042
- GB-A- 2 278 257

## Description

This invention relates to demodulating digital video broadcast (DVB) signals.

There are currently two major types of DVB, namely, terrestrial broadcasting and satellite/cable broadcasting. The invention is particularly, though not exclusively concerned with terrestrial broadcasting, which has special problems, particularly in communication channel impairment, arising from adjacent television channels, multipath, and co-channel interference, for example. A type of transmission which has been developed to meet these problems is known as Coded Orthogonal Frequency Division Multiplexing (COFDM) - see for example "Explaining Some of the Magic of COFDM" Stott, J.H. - Proceedings of 20th International Television Symposium, Montreux, June 1997. In COFDM, transmitted data is transmitted over a large number of carrier frequencies (1705 or 6817 for DVB), spaced (by the inverse of the active symbol period) so as to be orthogonal with each other; the data is convolutionally coded, to enable soft-decision (Viterbi) decoding. Metrics for COFDM are more complex than those of single frequency networks in that they include Channel State Information (CSI) which represents the degree of confidence in each carrier for reliably transmitting data.

Modulation and Demodulation of the carriers may be carried out by a Fast Fourier Transform (FFT) algorithm performing Discrete Fourier Transform operations. Naturally, various practical problems arise in demodulation, firstly in translating the transmitted signal to a frequency at which demodulation can be carried out, and secondly by accurately demodulating the data from a large number of carriers in a demodulator which is not overly complex or expensive.

It is an object of the present invention to provide a demodulator for digital terrestrial broadcast signals which can demodulate data transmitted by a COFDM system but which may be manufactured simply and inexpensively, preferably in a single integrated circuit chip.

Reference may be made to EP-A-0683576 which discloses the pre-characterizing features of the present invention.

The present invention is defined in the claims.

A preferred embodiment of the invention defined in the claims is described later to include
down-conversion means for converting an input broadcast signal to a frequency sufficiently low to enable analog to digital conversion of the signal;
analog to digital conversion means for converting the broadcast signal to a series of digital samples, real to complex conversion means for converting each digital sample to a complex number value, Fourier Transform means for analysing the complex number values to provide a series of signal values for each carrier frequency, frequency control means, comprising means responsive to the output of said Fourier Transform means for producing a signal for controlling the frequency of the signal formed by said complex number values, and signal processing means for receiving the signal values and providing an output for decoding, the signal processing means including channel equalisation means and channel state information processing means.

In accordance with the preferred embodiment, the input broadcast signal which is normally a UHF signal, say 700 MHz, is down converted, preferably in two stages, firstly to about 30-40 MHz and secondly to about 4.5 MHz. Since the bandwidth of the signal is about 7.6 MHz, an IF frequency of 4.5 MHZ represents essentially a DC or base band signal which can then be sampled by means of an analog to digital converter. Subsequent to analog to digital conversion, the sampled signal is converted to complex number values, in order to represent a true DC signal centred on OHz. This facilitates the operation of the Fourier transform device which as mentioned above is normally an FFT performing a DFT on each carrier signal. The result of the transform is a series of data values for the data encoded on each carrier wave.

The data is processed, principally for channel equalisation and for weighting the contribution of each channel by the derived Channel State Information.

Another signal processing employed is correction for common phase error. As will become clear below, phase error in COFDM signals is present in two components, a random component and a component which is common to all carriers, arising from local oscillator phase noise. Such common phase error may be removed by a technique as described in more detail below.

The process of demodulation requires very accurate tracking of the input signal and to this end automatic frequency control and timing control are desirable. Timing control is necessary in order to ensure that the timing window for the FFT is correctly positioned in relation to the input waveforms. Thus, the sampling by the ADC must be synchronised with the input wave forms. For an input signal centred on 4.57 MHz, an ADC operating frequency of 18.29 MHz (4.57 x 4) is preferred. The ADC is maintained in synchronisation by a loop control wherein the complex signal value at the input of the FFT is applied to a time synchronisation unit whose output is converted in a digital to analog converter (DAC) to an analog value, which is employed to control a voltage controlled oscillator providing a clock signal to the ADC.

Automatic frequency control (AFC) is necessary to maintain the demodulation process in synchronisation with down-conversion, otherwise a gradually increasing phase error occurs in the recovered signals. To this end, a signal derived subsequent to the FFT, from the demodulated signals may be fed back to the local oscillator for IF generation in order to maintain frequency synchronisation. However, such control has disadvantages of complication in that a control signal must be fed back to the IF generation means and the control signal must adjust the reference crystal within the search range of the AFC. As an alternative therefore, AFC may be provided as a digital control applied to a digital frequency shifter coupled the input of the FFT device. The process of automatic frequency control (AFC) is described in more detail below. However, it will be shown that AFC requires a coarse control and a fine control. The fine control is dependent upon measuring the phase difference (first difference) between two adjacent continual pilot signal samples, whereas the coarse control requires the determination of rate of change of phase (or second difference) i.e., the difference between two consecutive phase differences between adjacent samples.

An important consideration in designing a demodulator for incorporation in an integrated circuit chip is reducing the separating requirements for memory. Bearing in mind the chip may only contain about 1 M Bit of memory, and that signal values for up to about 7000 carrier frequencies may be processed in the chip, this requires tight control over the use of available memory. Certain operations such as Fourier transformation and symbol interleaving require fixed amounts of memory (about 50% of the total). However, other operations such as timing synchronisation, common phase error (CPE) correction, and channel equalisation require some memory but the amount of memory can be adjusted.

In particular, as will become clear below, common phase error requires at least one symbol delay (for each carrier) and channel equalisation may use three symbols delay (for each carrier). However, as pointed out above, automatic frequency control requires measuring phase differences, as does common phase error control. It has been found that by using the signal for second difference in phase error, it is possible to adjust the channel equalisation to use only two symbols delay. Since the common phase error determination already employs two symbols delay, it has been found, in accordance with the invention, that memory required for such two symbol delays may be shared between CPE correction and channel equalisation, so that data is stored in the same memory area for the two operations in different phases of operation of the demodulator.

Thus, the preferred embodiment of the invention defined in the claims is described later to include:
transform means for analysing a version of the broadcast signal to provide a series of signal values for each of the multiplicity of carrier frequencies,
phase error correction means for recovering the common phase error in said signal values, including a first plurality of delay elements for processing delayed versions of the signal values with current signal values,
channel equalisation means for compensating for communication channel impairments for receiving the phase error corrected signal values and including a second plurality of delay elements for processing delayed versions of the signal values with the current values, and
wherein the apparatus is arranged such that the phase error correction means employs said first plurality of delay elements in one phase of operation and the channel equalisation means employs said second plurality of delay elements in a different phase of operation whereby to permit the first and second plurality to be constituted by the same memory elements.

### BRIEF DESCRIPTION OF THE DRAWINGS

A preferred embodiment of the invention will now be described with reference to the accompanying drawings, in which:-
Figure 1 is a schematic block diagram of a digital terrestrial front end converter incorporating the present invention;
Figure 2 is a more detailed block diagram of demodulating apparatus according to the invention forming part of the converter of figure 1;
Figure 3 is a schematic view of a chip incorporating the apparatus of Figure 2; and
Figure 4 is a schematic block diagram of phase error correction means and channel equalisation means.

### DESCRIPTION OF THE PREFERRED EMBODIMENTS

The preferred embodiment of the present invention comprises a front end for digital terrestrial television transmitted according to the DVB-T specification. The front end consists of two separate components. First, an analog down-converter that converts the input signal from UHF to a low IF. Second, an integrated circuit chip that accepts the analog signal from the down-converter and performs the required DSP operations, which include synchronisation and demodulation, to form a stream of soft decisions suitable for presentation to an FEC decoder (Forward Error Correction decoder).

Full compliance to the DVB-T specification means that the chip is capable of decoding signals transmitted in the following modes:
1) A signal that contains either 1705 or 6817 active carriers, commonly referred to as 2K and 8K respectively. The chip includes the functionality and memory required to perform the FFT algorithm in both modes.
2) Non-hierarchical QPSK, 16-QAM and 64-QAM constellations.
3) Hierarchical 16-QAM and 64-QAM constellations, either uniform or non-uniform with the possible scale factors α=2 and α=4.
4) Guard intervals 1/4, 1/8, 1/16 and 1/32 of the OFDM symbol length.
5) Viterbi code rates 1/2, 2/3, 314, 5/6 and 7/8.

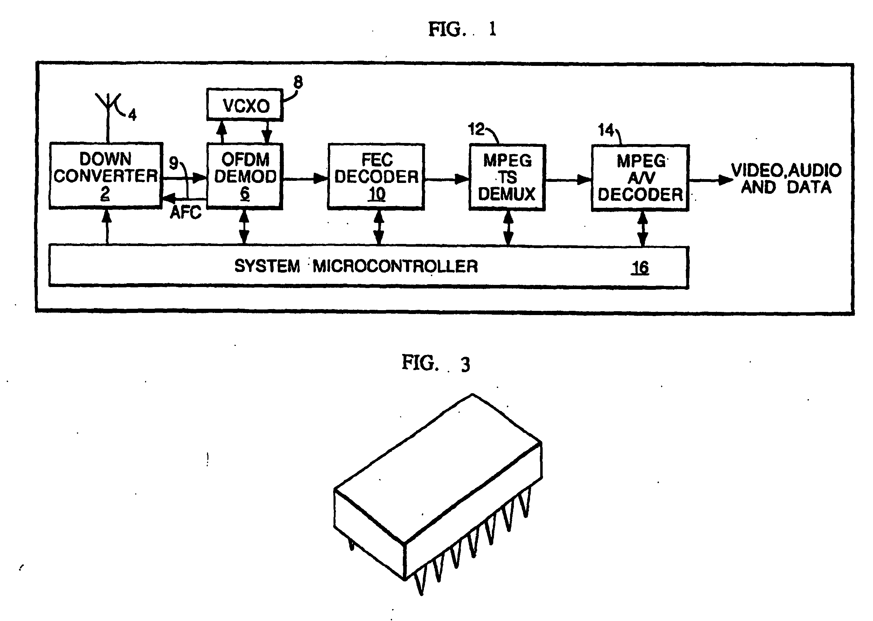

Referring now to figure 1, a block diagram of the front end system, a down-converter 2 receives the input UHF broadcast signal from an antenna 4 and converts the carrier signal to a first IF frequency of 30-40 MHz and then to a second IF frequency of 4.57 MHz. Since the bandwidth of the modulated data is about 7.6 MHz, this second IF signal is sufficiently low in frequency to present the signal as a base band signal to a demodulator chip 6. Demodulator chip digitises the incoming signal at a rate determined by a voltage controlled oscillator 8, and provides an Automatic Frequency Control on a line 9 to down-converter 2. The output of demodulator 6 represents demodulated data and is fed to a FEC decoder 10 (Forward Error Correction or Viterbi decoder) for recovering the data. The decoded data is fed to a transport stream demultiplexer 12 and then to an audio-visual decoder 14. The front end is controlled by a system microcontroller 16.

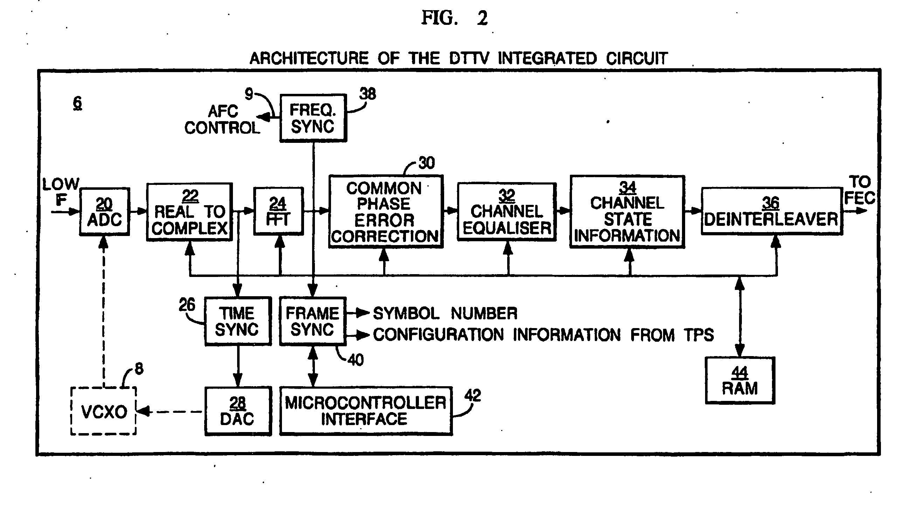

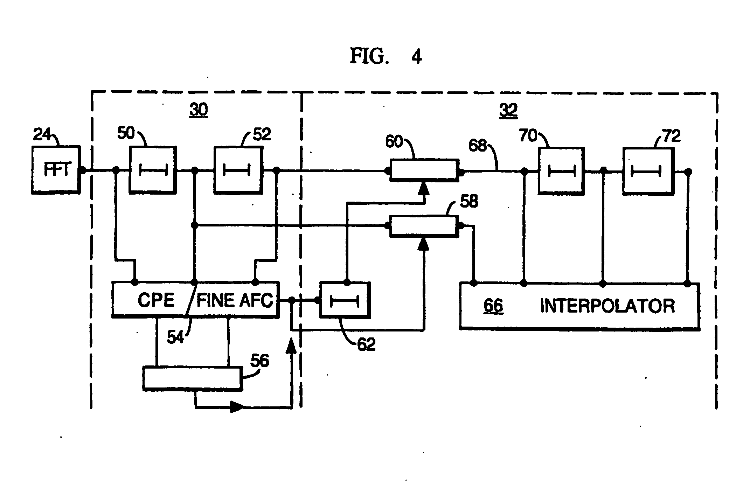

Referring now to figure 2, this shows the demodulator chip 6 in more detail. The chip itself is shown schematically in figure 3. The low second IF is fed to an analog digital converter which samples the IF signal at a frequency of 18.29 MHz (x 4 the second IF frequency of 4.57 MHz), in an analog to digital converter 20. The digital output samples are fed to a real to complex converter 22 which converts the digital samples to complex number values in order to provide a complex signal centred on zero frequency. This signal is fed to a Fast Fourier Transform device (FFT) 24 and to a timing synchronisation unit 26 which derives a value from the complex input signal which is fed to a digital to analog converter 28 to supply an analog control voltage to a voltage controlled oscillator 8, which provides a sampling clock signal to analog to digital converter 20.

The FFT device 24 has four modes of operation. Firstly, it is capable of performing either a 2048 point or an 8192 point transform. Second, it is capable of performing the transform in either direction. The inverse FFT functionality is provided so that the integrated circuit may be used in applications requiring OFDM modulation. In any event, the FFT performs a series of discrete Fourier transforms on each carrier frequency to provide at an output the data symbols for each carrier frequency. These output signals are corrected in phase at a common phase error generator unit 30 and then passed to a channel equaliser 32, a channel state information correction unit 34 and a deinterleaver 36. The signal thus processed is then passed at an output from the demodulator to forward error correction unit 10. The phase error correction block 30 calculates the common phase error of the signal and applies the necessary correction. The channel equaliser 32 first performs linear temporal equalisation followed by frequency equalisation using a high order interpolating filter. The equaliser outputs an equalised constellation to the channel state information unit 34. Unit 34 generates 3 or 4 bit soft decisions which are suitable for presentation to a Viterbi decoder. Deinterleaver 36 performs firstly symbol deinterleaving followed by bit deinterleaving.

In addition, the output signals from FFT 24 are passed to a frequency synchronisation unit 38 which converts it to a control signal for automatic frequency control, which acts upon a local oscillator in down-converter unit 2 for adjusting the frequency of the first or second IF.

In addition, the output of FFT 24 is fed to a frame synchronisation unit 40 whose outputs are fed forward to units 10, 12 and 14 (Fig. 1). A microcontroller interface 42 is provided, and in addition RAM memory 44 is provided to which all the units 22, 24, 30-36 have access to in order to provide their required operations.

### Channel Impairments

The front end architecture of Figure 1 must provide the best possible performance under actual operating conditions. There are several key types of channel impairments that the front end must be adept at dealing with, as follows:
1) Adjacent analog television signals. In multi-frequency networks OFDM signals may be transmitted in adjacent channels to PAL signals that could be 30dB higher in power. Therefore, special care must be taken when designing the IF filtering scheme in the down-converter, in particular by providing a high pass filter for the second IF having a stop band from 0 Hz to a certain higher frequency.
2) Co-channel analog television interference. This will be particularly significant in interleaved frequency networks.
3) Delayed signal interference, either due to reflections from.natural obstacles, or created by the network itself as is the case with single frequency networks. Such interference causes frequency selective fading which may completely erase, or significantly affect the reliability of, the bits of information carried by some of the OFDM carriers. This is compensated for in Channel State Information block 34.
4) Narrow-band interference coming from intermodulation products due to nonlinearities in the transmission chain may also corrupt the bits of information carried by some of the OFDM carriers but in a different way from the frequency selective fading.
5) Co-channel interference from artificial sources such as radio microphones operating in the UHF frequency.
6) and of course thermal noise, as is present in every transmission system.

The down-converter 4 must cope with the specific requirements of COFDM whilst operating in the channel conditions described above. This means:
1) The IF must ensure the proper rejection of adjacent channel analog television signals.
2) The gain distribution must preserve linearity in order not to create intermodulation products between the OFDM carriers, thus creating a self-interference effect on the signal, and
3) The synthesiser phase-noise characteristics must be compatible with 64-QAM operation.

### Memory Budget

A significant problem for demodulator integrated circuit 6 is the amount of RAM 42 that the chip requires.

**TABLE 1 - Proportion of RAM used**

| Architecture component | % RAM |
|---|---|
| Timing synchronisation | 2% |
| Frequency synchronisation | 11% |
| FFT | 38% |
| Common phase error correction | 11% |
| Channel equalisation | 23% |
| Channel State Information | 3 % |
| Deinterleaver | 12% |

It is necessary to make the best possible use of the RAM. Some of the blocks of memory, such as the FFT and symbol deinterleaver, require fixed amounts of RAM and it is not possible to reduce them (except by reducing the word widths and so degrading the performance). Other blocks, for example, the timing synchronisation, required some algorithmic alterations for the sole purpose of reducing the amount of memory but without degrading the performance. A technique that is employed to make best use of the available memory is to "reuse" some of the memories. For example, the data delay required to implement common-phase-error correction doubles as the first data delay in the channel equaliser. This means that only two additional data delays were required to implement full linear temporal equalisation. This is explained in more detail below with reference to Figure 4.

Table 1 shows the final allocations of RAM that were made in the chip. As this table shows, the highest memory usage is in the FFT circuitry and the smallest is in the timing synchronisation circuitry. This memory allocation provides the best compromise between performance and cost.

### Analog versus Digital AFC

One of the processes that is required in the synchronisation of the demodulator is to obtain frequency synchronisation. There is a choice as to whether to apply the required frequency shift as an analog correction in the down-converter 2, or as a digital frequency shift in the demodulator chip.

### Analog frequency correction

If the frequency correction is implemented by adjusting the frequency of the reference crystal in the down-converter 2, then a control signal on line 9 is provided from the output of the integrated circuit 6 back to the down-converter. This method has the advantage that a SAW filter inside the down-converter can be made as narrow as possible. The disadvantages are twofold. First, the integrated circuit must pass a control signal back to the down-converter. Second, the architecture of the down-converter is made more complicated since the control signal must adjust the reference crystal within the search range of the AFC.

### Digital Frequency Correction

If the frequency correction is implemented in the integrated circuit 6, then the architecture of the down-converter 2 is made much simpler since there is no longer any need to have a control signal from the chip 6, and the loop in the down-converter that drives the reference crystal is no longer required. The disadvantage of this method is that the bandwidth of the SAW filter must be increased by the AFC search range. This causes a significant penalty in terms of the adjacent channel protection ratio when the receiver is used in an environment where the existing analogue services are operated in adjacent channels to digital services. The architecture described will permit both analog and digital correction.

### Temporal Response versus Noise Averaging in Channel Equaliser 32

The signal from the FFT is affected by all the impairments caused by the channel; for example, in the presence of a single echo, the FFT output will suffer from frequency selective fading. The purpose of the channel equaliser 32 is to rotate and scale the constellation so that the constellations on all the carriers are of a known size (but not necessarily of the same reliability), the process is performed by using the scattered pilot information contained in the COFDM signal. The scattered pilots provide a reference signal of known amplitude and phase on every third OFDM carrier. Since this scattered pilot information is subject is subject to the same channel impairments as the data carriers, the scattered pilots are noisy.

In the present invention, temporal linear interpolation is performed between two received scattered pilots, and these interpolated values are used as the reference for frequency equalisation of the data. Since scattered pilots at the same time duration are spaced 4 OFDM symbols apart, a compensating data delay of 3 OFDM symbols must be provided to permit this option.

### Common Phase Error Connection versus Down Converter Performance

The down converter performance has a different set of requirements from those demanded by down-converters suitable for analog television. For example, in a down-converter for analogue television, particular attention must be given to the group delay-characteristics. However COFDM has been specially designed to be robust to this type of distortion, and so the group delay is much less important.

Another difference between the two requirements is in the local oscillator phase noise performance. The addition of local oscillator phase noise to an OFDM signal has two principal effects:
1) To rotate the received constellation by an amount which is the same for all carriers within one OFDM symbol, but varying randomly from symbol to symbol. This is called the common phase error (CPE) and primarily results from the lower- frequency components of the phase- noise spectrum; and
2) To add Inter-Carrier Interference (ICI) of a random character similar to additive thermal noise. ICI primarily results from the higher frequency components of the phase-noise spectrum. ICI cannot be corrected and must be allowed for in the noise budget. It can be kept small in comparison with thermal noise by suitable local oscillator design.

It is possible to remove the common phase-error component caused by phase noise added in the down-converted by digital processing in the chip. This processing is performed by the common-phase-error correction block 30.

The common-phase-error correction block 30 is able to remove the common phase error because all carriers within a given symbol suffer the same common phase error. By measuring the continual pilots, whose intended phase is the same from symbol to symbol, the common phase error is determined and then subtracted from the phase of all the data cells in the same symbol. There are sufficient continual pilots (which in any case are transmitted with a power approx. 2.5 dB greater than data cells) that the effect of thermal noise on this measurement can be rendered negligible by averaging.

There are essentially three components required to implement common-phase-error correction in the chip. These are:
1) A one-symbol data delay; since the common phase error varies randomly from symbol to symbol, it must be applied to the symbol from which it was calculated. Furthermore, it is not possible to calculate the common phase error until the whole symbol has been received.
2) The digital circuitry required to calculate the common phase error based on the received data.
3) A phase-to-complex-number look-up table. This is required since the common phase error value that is calculated will be a phase value. In order to apply the correction to the signal, the signal must be multiplied by a complex number equal to the complex representation of the phase.

These three factors, which together form the "cost" of implementing the feature on the chip, must be balanced against the cost of improving the performance of the down-converter so that the phase-noise it introduces is negligible.

Referring now to Figure 4, this shows a more detailed block diagram of the common phase error correction circuit 32 and channel equaliser 30. The common phase error correction circuit 30 receives an output from FFT 24 which is applied to first and second delay elements 50, 52 (two such elements being provided for each carrier frequency). Signals from the inputs and outputs of delay elements 50, 52 are provided to subtraction circuits in a unit 54 in order to derive phase error signals (first difference). In addition, the difference (second difference) between the phase error signals is determined in unit 56. These phase error signals are averaged for the continual pilot signals, as more particularly described in our copending application (GBP1288A). The assessed common phase error is applied to correction circuits 58, 60 , the output to correction circuit 60 being applied via a further delay element 62. The signal outputs from memory elements 50, 52 are thus corrected for phase in circuits 58, 60, and are applied to an interpolator 66 in channel equaliser circuit 32. The output circuit from correction circuit 58 is applied directly to the interpolator, but the signal from correction circuit 60 is applied to the interpolator firstly directly at tapping 68 and then via first and second memory elements 70, 72. Since the interpolator is provided with three sets of delayed symbols from delay element 62 and memory elements 70, 72 interpolation can be carried out on scattered pilots spaced four symbols apart, as provided in the ETSI standard and as described above.

By arranging for the circuits to operate in two phases of operation, in the first of which the common phase error is computed using delay elements 50, 52, and in the second of which interpolation occurs using memory elements 70, 72, it is possible to provide the two sets of memory elements 50, 52 and 70, 72, from the same section of RAM memory.

## Claims

1. Apparatus for demodulating a digital video broadcast signal comprising data modulated on a multiplicity of spaced carrier frequencies, comprising:
an analog-to-digital conversion circuit (20) configured to convert a version of the broadcast signal, reduced in frequency as desired, to a series of digital samples;
a real-to-complex conversion circuit (22) configured to convert the digital samples to complex number values;
a Fourier transform circuit (24) configured to analyze the complex number values to provide a series of signal values for each of the multiplicity of carrier frequencies;
a frequency control circuit (38) configured to provide a control signal (9) for controlling the frequency of the signals input to the Fourier transform circuit, in response to the output of the Fourier transform circuit; and
**characterized by**:
a signal processing circuit configured to provide a decoded output in response to the series of signal values, comprising a channel equalization circuit (32) for equalizing the constellations on all channels, and a channel state information generating circuit (34) for generating channel state information for weighting the contribution of each channel.

2. The apparatus according to claim 1, wherein said apparatus is incorporated in an integrated circuit chip (6).

3. An apparatus according to claim 1, further comprising:
a down-conversion circuit (2) upstream of the analog-to-digital conversion circuit (20) and configured to convert an input broadcast signal to a frequency sufficiently low to enable analog-to-digital conversion of the signal.

4. The apparatus according to claim 3, wherein the down-conversion circuit (2) comprises a first intermediate frequency circuit and second intermediate frequency circuit configured to produce a second intermediate frequency having a first bandwidth.

5. The apparatus according to claim 4, wherein the second IF frequency is about 4.5 MHZ.

6. The apparatus according to claim 4 or 5, wherein a sampling frequency of the analog-to-digital conversion circuit (20) is a multiple of the second IF frequency.

7. The apparatus according to claim 6, wherein the multiple is four times.

8. An apparatus according to any preceding claim, further comprising:
a time synchronization circuit (26) configured to control the sampling by the analog-to-digital conversion circuit (20) and provide a signal configured to control a voltage control oscillator (8) to determine the sampling frequency of the analog-to-digital conversion circuit (20), in response to the complex number values.

9. The apparatus according to claim 4 or any claim dependent thereon, wherein said frequency control circuit (38) is further configured to provide a signal to control local oscillators for said first and/or second IF frequencies, in response to the output of said Fourier transform circuit.

10. The apparatus according to any preceding claim, wherein said frequency control circuit (38) is arranged to provide a digital correction signal for application to the input of said Fourier Transform circuit (24).

11. The apparatus according to any preceding claim, further comprising:
a phase-error-correction circuit (30) configured to remove the common phase error in said signal values, comprising a first plurality of delay elements (50, 52) configured to process delayed versions of the signal values with current signal values; and
a channel equalization circuit (32) configured to compensate for communication channel impairments of the phase-error-corrected signal values, comprising a second plurality of delay elements (70, 72) configured to process delay versions of the signal values with the current values, wherein the phase-error-correction circuit (30) is further configured to employ said first plurality of delay elements (50, 52) in one phase of operation of the apparatus and the channel equalization circuit (32) is configured to employ said second plurality of delay elements (70, 72) in a different phase of operation of the apparatus, wherein the first and second pluralities are constituted from the same memory elements.

12. Apparatus for demodulating a digital video broadcast signal comprising data modulated on a multiplicity of spaced carrier frequencies, comprising:
a conversion circuit (22) configured to convert the broadcast signal to a complex number version of the broadcast signal;
a transform circuit (24) configured to analyze the complex number version of the broadcast signal to provide a series of signal values for each of the multiplicity of carrier frequencies;
a phase error-correction circuit (30) configured to remove the common phase error in the signal values, comprising a first plurality of delay elements (50, 52) configured to process delayed versions of the signal values with the current signal values; and **characterized by**
a channel equalization circuit (32) configured to compensate for communication channel impairments of the phase-error-corrected signal values, comprising a second plurality of delay elements (70, 72) configured to process delayed versions of the signal values with the current values,
wherein the phase-error-correction circuit (30) is further configured to employ the first plurality of delay elements (50, 52) in one phase of operation of the apparatus and the channel equalization circuit (32) is further configured to employ the second plurality of delay elements (70, 72) in a different phase of operation of the apparatus, whereby the first and second pluralities are constituted from the same memory elements.

13. The apparatus according to claim 12, wherein said apparatus is incorporated in an integrated circuit chip (6).

14. A method for demodulating a digital video broadcast signal comprising data modulated on a multiplicity spaced carrier frequencies, the method comprising:
converting of a version of the broadcast signal, reduced in frequency as desired, to a series of digital samples using an analog-to-digital converter;
converting the digital samples to complex number values;
analyzing the complex number values to provide a series of Fourier transform signal values for each of the multiplicity of carrier frequencies;
providing, from the series of Fourier transform signal values, a control signal for automatically controlling the frequency of the signals used to generate the Fourier transform signal values; **characterized by**
performing channel equalization on the Fourier transform signal values to equalize the constellations on all channels; and
generating state information from the Fourier transform signal values for weighting the contribution of each channel, and providing the state information and channel equalization in an output for decoding based on the Fourier transform signal values.

15. The method according to claim 14, further comprising, prior to the step of converting using an analog-to-digital converter, a step of converting the input broadcast signal to a frequency sufficiently low to enable analog-to-digital conversion of the signal.

16. A method for demodulating a digital video broadcast signal comprising data modulated on a multiplicity of spaced carrier frequencies, the method comprising:
converting the broadcast signal to a complex number version of the broadcast signal;
analyzing the complex number version of the broadcast signal to provide a series of signal values for each of the multiplicity of carrier frequencies;
removing the common phase error in the signal values by phase-error-correction and providing processing delayed versions of the signal values with the current signal values; and
providing a signal for controlling the frequency of the complex number version of the broadcast signal in response to the phase-error-corrected signal values; and
**characterized by**
compensating the phase-error-corrected signal values for communication channel impairments by channel equalization and providing processing delayed versions of the signal values with the current values, wherein the phase-error-correction employs a plurality of delay elements in one phase of operation and the channel equalization employs the same plurality of delay elements in a different phase of operation.

## Patentansprüche

1. Vorrichtung zum Demodulieren eines digitalen Video-Rundfunksignals mit Daten, die auf mehreren getrennten Trägerfrequenzen moduliert sind, mit:
einer Analog-Digital-Wandlungsschaltung (20), die so konfiguriert ist, dass sie eine Variante des Rundfunksignals, das bei Bedarf frequenzreduziert worden ist, in eine Reihe von digitalen Abtastwerten umwandelt;
einer Reell-Komplex-Wandlungsschaltung (22), die so konfiguriert ist, dass sie die digitalen Abtastwerte in komplexe Zahlenwerte umwandelt;
einer Fourier-Transformations-Schaltung (24), die so konfiguriert ist, dass sie die komplexen Zahlenwerte analysiert, um eine Reihe von Signalwerten für jede der mehreren Trägerfrequenzen bereitzustellen; und
einer Frequenzsteuerschaltung (38), die so konfiguriert ist, dass sie ein Steuersignal (9) zum Steuern der Frequenz der in die Fourier-Transformations-Schaltung eingegebenen Signale in Reaktion auf das Ausgangssignal der Fourier-Transformations-Schaltung bereitstellt,
**gekennzeichnet durch**
eine Signalverarbeitungsschaltung, die so konfiguriert ist, dass sie ein decodiertes Ausgangssignal in Reaktion auf die Reihe von Signalwerten bereitstellt, und die eine Kanalentzerrungsschaltung (32) zum Entzerren der Konstellationen auf allen Kanälen und eine Kanalzustandsinformationen-Erzeugungsschaltung (34) zum Erzeugen von Kanalzustandsinformationen zum Bewerten des Beitrags jedes Kanals aufweist.

2. Vorrichtung nach Anspruch 1, **dadurch gekennzeichnet, dass** die Vorrichtung in einen Integrierter-Schaltkreis-Chip (6) eingebaut ist.

3. Vorrichtung nach Anspruch 1, die weiterhin eine Abwärtswandlungsschaltung (2) aufweist, die vor der Analog-Digital-Wandlungsschaltung (20) angeordnet ist und so konfiguriert ist, dass sie ein eingegebenes Rundfunksignal in eine Frequenz umwandelt, die so niedrig ist, dass eine Analog-Digital-Wandlung des Signals möglich wird.

4. Vorrichtung nach Anspruch 3, **dadurch gekennzeichnet, dass** die Abwärtswandlungsschaltung (2) eine erste Zwischenfrequenz-Schaltung und eine zweite Zwischenfrequenz-Schaltung aufweist, die so konfiguriert ist, dass sie eine zweite Zwischenfrequenz mit einer ersten Bandbreite erzeugt.

5. Vorrichtung nach Anspruch 4, **dadurch gekennzeichnet, dass** die zweite Zwischenfrequenz etwa 4,5 MHz beträgt.

6. Vorrichtung nach Anspruch 4 oder 5, **dadurch gekennzeichnet, dass** eine Abtastfrequenz der Analog-Digital-Wandlungsschaltung (20) ein Vielfaches der zweiten Zwischenfrequenz ist.

7. Vorrichtung nach Anspruch 6, **dadurch gekennzeichnet, dass** das Vielfache das Vierfache ist.

8. Vorrichtung nach einem der vorhergehenden Ansprüche, die weiterhin eine Zeitsynchronisationsschaltung (26) aufweist, die so konfiguriert ist, dass sie die Abtastung mit der Analog-Digital-Wandlungsschaltung (20) steuert und in Reaktion auf die komplexen Zahlenwerte ein Signal bereitstellt, das so konfiguriert ist, dass es einen spannungsgesteuerten Oszillator (8) steuert, um die Abtastfrequenz der Analog-Digital-Wandlungsschaltung (20) zu bestimmen.

9. Vorrichtung nach Anspruch 4 oder einem seiner Unteransprüche, **dadurch gekennzeichnet, dass** die Frequenzsteuerschaltung (38) weiterhin so konfiguriert ist, dass sie in Reaktion auf das Ausgangssignal der Fourier-Transformations-Schaltung ein Signal zum Steuern von Überlagerungsoszillatoren für die erste und/oder zweite Zwischenfrequenz bereitstellt.

10. Vorrichtung nach einem vorhergehenden Anspruch, **dadurch gekennzeichnet, dass** die Frequenzsteuerschaltung (38) so eingerichtet ist, dass sie ein digitales Korrektursignal zum Anlegen an den Eingang der Fourier-Transformations-Schaltung (24) bereitstellt.

11. Vorrichtung nach einem vorhergehenden Anspruch, die weiterhin Folgendes aufweist:
eine Phasenfehler-Korrekturschaltung (30), die so konfiguriert ist, dass sie den gemeinsamen Phasenfehler in den Signalwerten entfernt, und die eine erste Mehrzahl von Verzögerungselementen (50, 52) aufweist, die so konfiguriert sind, dass sie verzögerte Varianten der Signalwerte mit aktuellen Signalwerten verarbeiten; und
eine Kanalentzerrungsschaltung (32), die so konfiguriert ist, dass sie Übertragungskanal-Beeinträchtigungen der Phasenfehler-korrigierten Signalwerte kompensiert, und die eine zweite Mehrzahl von Verzögerungselementen (70, 72) aufweist, die so konfiguriert sind, dass sie Verzögerungsvarianten der Signalwerte mit den aktuellen Signalwerten verarbeiten, wobei die Phasenfehler-Korrekturschaltung (30) weiterhin so konfiguriert ist, dass sie die erste Mehrzahl von Verzögerungselementen (50, 52) in einer Phase des Betriebs der Vorrichtung verwendet, und die Kanalentzerrungsschaltung (32) so konfiguriert ist, dass sie die zweite Mehrzahl von Verzögerungselementen (70, 72) in einer anderen Phase des Betriebs der Vorrichtung verwendet, wobei die erste und die zweite Mehrzahl von den gleichen Speicherelementen gebildet werden.

12. Vorrichtung zum Demodulieren eines digitalen Video-Rundfunksignals mit Daten, die auf mehreren getrennten Trägerfrequenzen moduliert sind, mit:
einer Wandlungsschaltung (22), die so konfiguriert ist, dass sie das Rundfunksignal in eine Komplexe-Zahl-Variante des Rundfunksignals umwandelt;
einer Transformationsschaltung (24), die so konfiguriert ist, dass sie die Komplexe-Zahl-Variante des Rundfunksignals analysiert, um eine Reihe von Signalwerten für jede der mehreren Trägerfrequenzen bereitzustellen; und
einer Phasenfehler-Korrekturschaltung (30), die so konfiguriert ist, dass sie den gemeinsamen Phasenfehler in den Signalwerten entfernt, und die eine erste Mehrzahl von Verzögerungselementen (50, 52) aufweist, die so konfiguriert sind, dass sie verzögerte Varianten der Signalwerte mit den aktuellen Signalwerten verarbeiten,
**gekennzeichnet durch**
eine Kanalentzerrungsschaltung (32), die so konfiguriert ist, dass sie Übertragungskanal-Beeinträchtigungen der Phasenfehler-korrigierten Signalwerte kompensiert, und die eine zweite Mehrzahl von Verzögerungselementen (70, 72) aufweist, die so konfiguriert sind, dass sie verzögerte Varianten der Signalwerte mit den aktuellen Werten verarbeiten,
wobei die Phasenfehier-Korrekturschaitung (30) weiterhin so konfiguriert ist, dass sie die erste Mehrzahl von Verzögerungselementen (50, 52) in einer Phase des Betriebs der Vorrichtung verwendet, und die Kanalentzerrungsschaltung (32) weiterhin so konfiguriert ist, dass sie die zweite Mehrzahl von Verzögerungselementen (70, 72) in einer anderen Phase des Betriebs der Vorrichtung verwendet, wobei die erste und die zweite Mehrzahl von den gleichen Speicherelementen gebildet werden.

13. Vorrichtung nach Anspruch 12, **dadurch gekennzeichnet, dass** die Vorrichtung in einen Integrierter-Schaltkreis-Chip (6) eingebaut ist.

14. Verfahren zum Demodulieren eines digitalen Video-Rundfunksignals mit Daten, die auf mehreren getrennten Trägerfrequenzen moduliert sind, mit den Schritten:
Umwandeln einer Variante des Rundfunksignals, das bei Bedarf frequenzreduziert worden ist, in eine Reihe von digitalen Abtastwerten unter Verwendung eines Analog-Digital-Wandlers;
Umwandeln der digitalen Abtastwerte in komplexe Zahlenwerte;
Analysieren der komplexen Zahlenwerte, um eine Reihe von Fourier-Transformations-Signalwerten für jede der mehreren Trägerfrequenzen bereitzustellen; und
Bereitstellen, aus der Reihe von Fourier-Transformations-Signalwerten, eines Steuersignals zum automatischen Steuern der Frequenz der Signale, die zum Erzeugen der Fourier-Transformations-Signalwerte verwendet worden sind,
**gekennzeichnet durch**
Durchführen einer Kanalentzerrung an den Fourier-Transformations-Signalwerten, um die Konstellationen auf allen Kanälen zu entzerren, und
Erzeugen von Zustandsinformationen aus den Fourier-Transformations-Signalwerten zum Bewerten des Beitrags jedes Kanals und zum Bereitstellen der Zustandsinformationen und der Kanalentzerrung in einem Ausgangssignal zum Decodieren aufgrund der Fourier-Transformations-Signalwerte.

15. Verfahren nach Anspruch 14, das vor dem Schritt des Umwandelns unter Verwendung eines Analog-Digital-Wandlers weiterhin einen Schritt des Umwandelns des eingegebenen Rundfunksignals in eine Frequenz aufweist, die so niedrig ist, dass eine Analog-Digital-Wandlung des Signals möglich wird.

16. Verfahren zum Demodulieren eines digitalen Video-Rundfunksignals mit Daten, die auf mehreren getrennten Trägerfrequenzen moduliert sind, mit den Schritten:
Umwandeln des Rundfunksignals in eine Komplexe-Zahl-Variante des Rundfunksignals;
Analysieren der Komplexe-Zahl-Variante des Rundfunksignals, um eine Reihe von Signalwerten für jede der mehreren Trägerfrequenzen bereitzustellen;
Entfernen des gemeinsamen Phasenfehlers in den Signalwerten durch Phasenfehlerkorrektur und Durchführen der Verarbeitung von verzögerten Varianten der Signalwerte mit den aktuellen Signalwerten; und
Bereitstellen eines Signals zum Steuern der Frequenz der Komplexe-Zahl-Variante des Rundfunksignals in Reaktion auf die Phasenfehler-korrigierten Signalwerte,
**gekennzeichnet durch**
Kompensieren von Übertragungskanal-Beeinträchtigungen der Phasenfehler-korrigierten Signalwerte **durch** Kanalentzerrung und Durchführen der Verarbeitung von verzögerten Varianten der Signalwerte mit den aktuellen Werten, wobei die Phasenfehlerkorrektur eine Mehrzahl von Verzögerungselementen in einer Phase des Betriebs verwendet und die Kanalentzerrung die gleiche Mehrzahl von Verzögerungselementen in einer anderen Phase des Betriebs verwendet.

## Revendications

1. Dispositif destiné à démoduler un signal de diffusion vidéo numérique comprenant des données modulées sur une multitude de fréquences porteuses espacées, comprenant :
un circuit de conversion d'analogique en numérique (20) configuré pour convertir une version du signal de diffusion, réduit en fréquence selon ce qui est souhaité, en une série d'échantillons numériques,
un circuit de conversion de réel en complexe (22) configuré pour convertir les échantillons numériques en valeurs en nombres complexes,
un circuit de transformation de Fourier (24) configuré pour analyser les valeurs en nombres complexes pour fournir une série de valeurs de signaux pour chaque fréquence de la multitude de fréquences porteuses,
un circuit de commande de fréquence (38) configuré pour fournir un signal de commande (9) pour commander la fréquence des signaux appliqués en entrée au circuit de transformation de Fourier, en réponse à la sortie du circuit de transformation de Fourier, et **caractérisé par** :
un circuit de traitement de signal configuré pour fournir une sortie décodée en réponse à la série de valeurs de signaux, comprenant un circuit d'égalisation de canaux (32) destiné à égaliser les constellations sur tous les canaux, et un circuit de génération d'informations d'état de canal (34) destiné à générer des informations d'état de canal pour pondérer la contribution de chaque canal.

2. Dispositif selon la revendication 1 , où ledit dispositif est incorporé dans une puce de circuit intégré (6).

3. Dispositif selon la revendication 1, comprenant en outre :
un circuit de changement de fréquence (2) en amont du circuit de conversion d'analogique en numérique (20) et configuré pour convertir un signal de diffusion d'entrée en une fréquence suffisamment faible pour permettre une conversion d'analogique en numérique du signal.

4. Dispositif selon la revendication 3, dans lequel le circuit de changement de fréquence (2) comprend un circuit à une première fréquence intermédiaire et un circuit à une seconde fréquence intermédiaire configuré pour produire une seconde fréquence intermédiaire présentant une première bande passante.

5. Dispositif selon la revendication 4, dans lequel la seconde fréquence intermédiaire est d'environ 4,5 MHz.

6. Dispositif selon la revendication 4 ou 5, dans lequel une fréquence d'échantillonnage du circuit de conversion d'analogique en numérique (20) est un multiple de la seconde fréquence intermédiaire.

7. Dispositif selon la revendication 6, dans lequel le multiple est de quatre fois.

8. Dispositif selon l'une quelconque des revendications précédentes, comprenant en outre :
un circuit de synchronisation dans le temps (26) configuré pour commander l'échantillonnage par le circuit de conversion d'analogique en numérique (20) et fournir un signal configuré pour commander un oscillateur commandé en tension (8) pour déterminer la fréquence d'échantillonnage du circuit de conversion d'analogique en numérique (20) en réponse aux valeurs en nombres complexes.

9. Dispositif selon la revendication 4 ou une revendication quelconque dépendant de celle-ci, dans lequel ledit circuit de commande de fréquence (38) est en outre configuré pour fournir un signal pour commander des oscillateurs locaux pour lesdites première et/ou seconde fréquences intermédiaires, en réponse à la sortie dudit circuit de transformation de Fourier.

10. Dispositif selon l'une quelconque des revendications précédentes, dans lequel ledit circuit de commande de fréquence (38) est conçu pour fournir un signal de correction numérique pour une application à l'entrée dudit circuit de transformation de Fourier (24).

11. Dispositif selon l'une quelconque des revendications précédentes, comprenant en outre :
un circuit de correction d'erreur de phase (30) configuré pour éliminer l'erreur de phase commune dans lesdites valeurs de signaux, comprenant une première pluralité d'éléments à retard (50, 52) configurés pour traiter des versions retardées des valeurs de signaux avec des valeurs de signaux en cours, et
un circuit d'égalisation de canaux (32) configuré pour compenser des altérations de canaux de communication des valeurs de signaux à erreurs de phase corrigées, comprenant une seconde pluralité d'éléments à retard (70, 72) configurés pour traiter des versions retardées des valeurs de signaux avec les valeurs en cours, où le circuit de correction d'erreur de phase (30) est en outre configuré pour employer ladite première pluralité d'éléments à retard (50, 52) dans une première phase de fonctionnement du dispositif et le circuit d'égalisation de canaux (32) est configuré pour employer ladite seconde pluralité d'éléments à retard (70, 72) dans une phase différente de fonctionnement du dispositif, où les première et seconde pluralités sont constituées des mêmes éléments de mémoires.

12. Dispositif destiné à démoduler un signal de diffusion vidéo numérique, comprenant des données modulées sur une multitude de fréquences porteuses espacées, comprenant :
un circuit de conversion (22) configuré pour convertir le signal de diffusion en une version en nombre complexe du signal de diffusion,
un circuit de transformation (24) configuré pour analyser la version en nombre complexe du signal de diffusion pour fournir une série de valeurs de signaux pour chaque fréquence de la multitude de fréquences porteuses,
un circuit de correction d'erreur de phase (30) configuré pour éliminer l'erreur de phase commune dans les valeurs de signaux, comprenant une première pluralité d'éléments à retard (50, 52) configurés pour traiter des versions retardées des valeurs de signaux avec les valeurs de signaux en cours, et
**caractérisé par**
un circuit d'égalisation de canaux (32) configuré pour compenser des altérations de canaux de communication des valeurs de signaux à erreurs de phase corrigées, comprenant une seconde pluralité d'éléments à retard (70, 72) configurés pour traiter des versions retardées des valeurs de signaux avec les valeurs en cours,
où le circuit de correction d'erreur de phase (30) est en outre configuré pour employer la première pluralité d'éléments à retard (50, 52) dans une première phase de fonctionnement du dispositif et le circuit d'égalisation de canaux (32) est en outre configuré pour employer la seconde pluralité d'éléments à retard (70, 72) dans une phase différente de fonctionnement du dispositif, grâce à quoi les première et seconde pluralités sont constituées à partir des mêmes éléments de mémoires.

13. Dispositif selon la revendication 12, dans lequel ledit dispositif est incorporé dans une puce de circuit intégré (6).

14. Procédé de démodulation d'un signal de diffusion vidéo numérique, comprenant des données modulées sur une multitude de fréquences porteuses espacées, le procédé comprenant :
la conversion d'une version du signal de diffusion, réduit en fréquence comme souhaité, en une série d'échantillons numériques en utilisant un convertisseur d'analogique en numérique,
la conversion des échantillons numériques en valeurs en nombres complexes,
l'analyse des valeurs en nombres complexes pour fournir une série de valeurs de signaux de transformation de Fourier pour chaque fréquence de la multitude de fréquences porteuses,
la fourniture, à partir des valeurs de signaux de transformation de Fourier, d'un signal de commande pour commander automatiquement la fréquence des signaux utilisés pour générer les valeurs de signaux de transformation de Fourier, **caractérisé par**
la réalisation d'une égalisation de canaux sur les valeurs de signaux de transformation de Fourier pour égaliser les constellations sur tous les canaux, et
la génération d'informations d'état à partir des valeurs de signaux de transformation de Fourier pour pondérer la contribution de chaque canal, et la fourniture des informations d'état et l'égalisation de canaux dans une sortie pour un décodage sur la base des valeurs de signaux de transformation de Fourier.

15. Procédé selon la revendication 14, comprenant en outre, avant l'étape de conversion utilisant un convertisseur d'analogique en numérique, une étape de conversion du signal de diffusion d'entrée à une fréquence suffisamment basse pour permettre la conversion d'analogique en numérique du signal.

16. Procédé de démodulation d'un signal de diffusion vidéo numérique, comprenant des données modulées sur une multitude de fréquences porteuses espacées, le procédé comprenant :
la conversion du signal de diffusion en une version en nombre complexe du signal de diffusion,
l'analyse de la version en nombre complexe du signal de diffusion pour fournir une série de valeurs de signaux pour chaque fréquence de la multitude de fréquences porteuses,
l'élimination de l'erreur de phase commune des valeurs de signaux par une correction d'erreur de phase et la fourniture d'un traitement des versions retardées des valeurs de signaux avec les valeurs de signaux en cours, et
la fourniture d'un signal pour commander la fréquence de la version en nombre complexe du signal de diffusion en réponse aux valeurs de signaux à erreurs de phase corrigées, et **caractérisé par**
le fait de compenser les valeurs de signaux à erreurs de phase corrigées vis-à-vis d'altérations de canaux de communication par une égalisation de canaux et la fourniture du traitement de versions retardées des valeurs de signaux avec les valeurs en cours, où la correction d'erreur de phase emploie une pluralité d'éléments à retard dans une première phase de fonctionnement et l'égalisation de canaux emploie la même pluralité d'éléments à retard dans une phase de fonctionnement différente.
